# EUROPÄISCHE PATENTSCHRIFT

(11) **EP 2 798 191 B1**
(45) Veröffentlichungstag und Bekanntmachung des Hinweises auf die Patenterteilung: **18.05.2016**
(21) Anmeldenummer: 12809281.4
(22) Anmeldetag: 27.12.2012
(51) Int. Cl.: F16K 17/28, F02M 37/00, F02M 59/44, F02M 63/00, F02M 55/00, F16K 17/04, F16K 17/30

(54) **KRAFTSTOFFÜBERSTRÖMVENTIL FÜR EINE KRAFTSTOFFEINSPRITZEINRICHTUNG UND KRAFTSTOFFEINSPRITZEINRICHTUNG MIT KRAFTSTOFFÜBERSTRÖMVENTIL**
FUEL OVERFLOW VALVE FOR A FUEL INJECTION DEVICE, AND FUEL INJECTION DEVICE COMPRISING FUEL OVERFLOW VALVE
SOUPAPE DE DÉCHARGE DE CARBURANT POUR UN INJECTEUR DE CARBURANT ET INJECTEUR DE CARBURANT ÉQUIPÉ D'UNE SOUPAPE DE DÉCHARGE DE CARBURANT

(30) Priorität: 27.12.2011 DE 102011089972
(43) Veröffentlichungstag der Anmeldung: 05.11.2014
(73) Patentinhaber: Robert Bosch GmbH, 70442 Stuttgart (DE)
(72) Erfinder: BOECKING, Friedrich, Bangalore 560030 (IN)
(86) Internationale Anmeldenummer: PCT/EP2012/076919
(87) Internationale Veröffentlichungsnummer: WO 2013/098302

(56) Entgegenhaltungen:
- EP-A1- 1 555 468
- GB-A- 2 400 641
- NL-A- 7 800 559
- US-A- 3 344 806
- US-A- 3 762 433

## Beschreibung

### Stand der Technik

Die Erfindung geht aus von einem Kraftstoffüberströmventil für eine Kraftstoffeinspritzeinrichtung und einer Kraftstoffeinspritzeinrichtung mit Kraftstoffüberströmventil nach der Gattung des Anspruchs 1 bzw. des Anspruchs 11.

Ein Kraftstoffüberströmventil und eine Kraftstoffeinspritzeinrichtung mit Kraftstoffüberströmventil ist durch die DE 10 2007 006 945 A1 bekannt. Dieses Kraftstoffüberströmventil dient zur Druckbegrenzung in einem Niederdruckbereich der Kraftstoffeinspritzeinrichtung. Das Kraftstoffüberströmventil weist ein Ventilgehäuse auf, in dem ein Ventilglied beweglich angeordnet ist, das mit einem im Ventilgehäuse angeordneten Ventilsitz zusammenwirkt. Das Ventilglied ist durch eine Ventilfeder in Schließrichtung und durch den im Niederdruckbereich herrschenden Druck in Öffnungsrichtung beaufschlagt. Wenn der Druck im Niederdruckbereich den durch die Ventilfeder bestimmten Öffnungsdruck überschreitet, so öffnet das Kraftstoffüberströmventil und Kraftstoff kann aus dem Niederdruckbereich in einen Entlastungsbereich abströmen. Die Kraftstoffeinspritzeinrichtung weist eine Hochdruckpumpe auf, durch die Kraftstoff unter Hochdruck zumindest mittelbar, beispielsweise über einen Speicher, zu wenigstens einem Injektor gefördert wird.

Durch eine Förderpumpe wird Kraftstoff zur Hochdruckpumpe gefördert. Die Hochdruckpumpe weist wenigstens einen durch einen in einem Antriebsbereich angeordneten Antrieb in einer Hubbewegung angetriebenen Pumpenkolben auf. Der Niederdruckbereich der Kraftstoffeinspritzeinrichtung erstreckt sich zwischen der Förderpumpe und der Hochdruckpumpe und in diesem herrscht ein durch die Förderpumpe erzeugter Niederdruck. Der Niederdruckbereich ist mit dem Antriebsbereich der Hochdruckpumpe verbunden. Um eine ausreichende Schmierung des Antriebsbereichs der Hochdruckpumpe sicherzustellen ist eine gute Entlüftung des Niederdruckbereichs erforderlich. Dies ist mit dem bekannten Überströmventil unter Umständen nicht möglich.

Durch die EP 1 555 468 A1 ist ein Druckbegrenzungsventil bekannt, das auch als Kraftstoffüberströmventil verwendet werden kann. Dieses Druckbegrenzungsventil weist ein in einer Aufnahme beweglich angeordnetes Ventilglied auf, das in Schließrichtung durch eine Ventilfeder und in Öffnungsrichtung durch den in einem Zulauf herrschenden Druck beaufschlagt ist. Durch das Druckbegrenzungsventil wird bei Erreichen von dessen Öffnungsdruck eine Verbindung des Zulaufs mit einem Rücklauf geöffnet. In der Aufnahme ist ein Ventilträger feststehend angeordnet, der einen hülsenförmigen Abschnitt aufweist, auf dem das ringförmig ausgebildete Ventilglied verschiebbar geführt ist. Durch das Ventilglied wird eine durch den hülsenförmigen Abschnitt verlaufende Verbindung mit dem Rücklauf gesteuert. Der Ventilträger weist einen an den hülsenförmigen Abschnitt anschließenden Ringbund auf, über den der Ventilträger in der Aufnahme gehalten ist. Der Zulauf mündet in die Aufnahme in axialer Richtung in die Aufnahme, wodurch eine große Baulänge des Druckregelventils erforderlich ist. Außerdem ist der Zulauf sehr tief im Druckregelventil angeordnet, wodurch eine Entlüftung im Zulauf erschwert ist.

### Offenbarung der Erfindung

### Vorteile der Erfindung

Das erfindungsgemäße Kraftstoffüberströmventil mit den Merkmalen gemäß Anspruch 1 hat demgegenüber den Vorteil, dass die Entlüftung des Niederdruckbereichs verbessert ist und das Kraftstoffüberströmventil einen einfachen und kompakten Aufbau aufweist. Entsprechende Vorteile ergeben sich für die Kraftstoffeinspritzeinrichtung gemäß Anspruch 11 deren Funktion durch die verbesserte Entlüftung im Niederdruckbereich verbessert ist.

In den abhängigen Ansprüchen sind vorteilhafte Ausgestaltungen und Weiterbildungen des erfindungsgemäßen Kraftstoffüberströmventils angegeben.

### Zeichnung

Zwei Ausführungsbeispiele der Erfindung sind in der Zeichnung dargestellt und in der nachfolgenden Beschreibung näher erläutert. Es zeigen Figur 1 eine Kraftstoffeinspritzeinrichtung in einer vereinfachten schematischen Darstellung, Figur 2 ein Kraftstoffüberströmventil der Kraftstoffeinspritzeinrichtung gemäß einem ersten Ausführungsbeispiel in einem Längsschnitt und Figur 3 das Kraftstoffüberströmventil gemäß einem zweiten Ausführungsbeispiel.

### Beschreibung der Ausführungsbeispiele

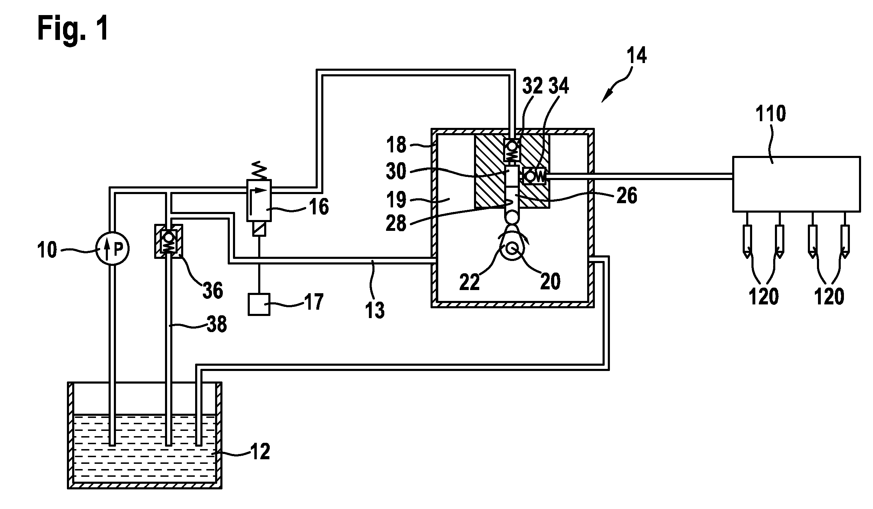

In Figur 1 ist eine Kraftstoffeinspritzeinrichtung für eine Brennkraftmaschine dargestellt. Die Kraftstoffeinspritzeinrichtung weist eine Förderpumpe 10 auf, die Kraftstoff aus einem Kraftstoffvorratsbehälter 12 ansaugt und zur Saugseite einer Hochdruckpumpe 14 fördert. Von der Förderpumpe 10 wird der Kraftstoff auf einen Förderdruck von beispielsweise etwa 4 bis 6 bar verdichtet. Die Förderpumpe 10 kann elektrisch oder mechanisch angetrieben sein. Zwischen der Förderpumpe 10 und der Saugseite der Hochdruckpumpe 14 kann eine Kraftstoffzumesseinrichtung 16 angeordnet sein, durch die die von der Hochdruckpumpe 14 angesaugte und unter Hochdruck geförderte Kraftstoffmenge variabel eingestellt werden kann. Die Kraftstoffzumesseinrichtung 16 kann ein Proportionalventil sein, das unterschiedlich große Durchflussquerschnitte einstellen kann, oder ein getaktetes Ventil und wird mechanisch oder elektrisch durch eine elektronische Steuereinrichtung 17 angesteuert.

Die Hochdruckpumpe 14 weist ein Gehäuse 18 auf, in dem in einem Innenraum 19 eine rotierend angetriebene Antriebswelle 20 angeordnet ist. Der Innenraum 19 des Gehäuses 18 mit der Antriebswelle 20 bildet einen Antriebsbereich der Hochdruckpumpe 14. Die Antriebswelle 20 weist wenigstens einen Nocken 22 oder Exzenter auf, wobei der Nocken 22 auch als Mehrfachnocken ausgebildet sein kann. Die Hochdruckpumpe weist wenigstens ein oder mehrere Pumpenelemente 24 mit jeweils einem Pumpenkolben 26 auf, der durch den Nocken 22 der Antriebswelle 20 mittelbar in einer Hubbewegung in zumindest annähernd radialer Richtung zur Drehachse der Antriebswelle 20 angetrieben wird. Der Pumpenkolben 26 ist in einer Zylinderbohrung 28 dicht geführt und begrenzt mit seiner der Antriebswelle 20 abgewandten Seite einen Pumpenarbeitsraum 30. Der Pumpenarbeitsraum 30 weist über ein in den Pumpenarbeitsraum 30 öffnendes Einlassventil 32 eine Verbindung mit dem Kraftstoffzulauf von der Förderpumpe 10 her auf. Der Pumpenarbeitsraum 30 weist ausserdem über ein aus dem Pumpenarbeitsraum 30 öffnendes Auslassventil 34 eine Verbindung mit einem Auslass auf, der beispielsweise mit einem Hochdruckspeicher 110 verbunden ist. Mit dem Hochdruckspeicher 110 sind ein oder vorzugsweise mehrere an den Zylindern der Brennkraftmaschine angeordnete Injektoren 120 verbunden, durch die Kraftstoff in die Zylinder der Brennkraftmaschine eingespritzt wird. Der Hochdruckspeicher 110 kann auch entfallen, wobei die Hochdruckpumpe 14 dann mit den Injektoren 120 über hydraulische Leitungen verbunden ist. Bei seinem Saughub bewegt sich der Pumpenkolben 26 in den Innenraum 19 hinein und saugt dabei über das geöffnete Einlassventil 32 Kraftstoff aus dem Zulauf von der Förderpumpe 10 her in den Pumpenarbeitsraum 30 an. Bei seinem Förderhub bewegt sich der Pumpenkolben 26 aus dem Innenraum 19 heraus und fördert Kraftstoff unter Hochdruck aus dem Pumpenarbeitsraum 30 über das geöffnete Auslassventil 34 in den Hochdruckspeicher 110 bzw. zu den Injektoren 120.

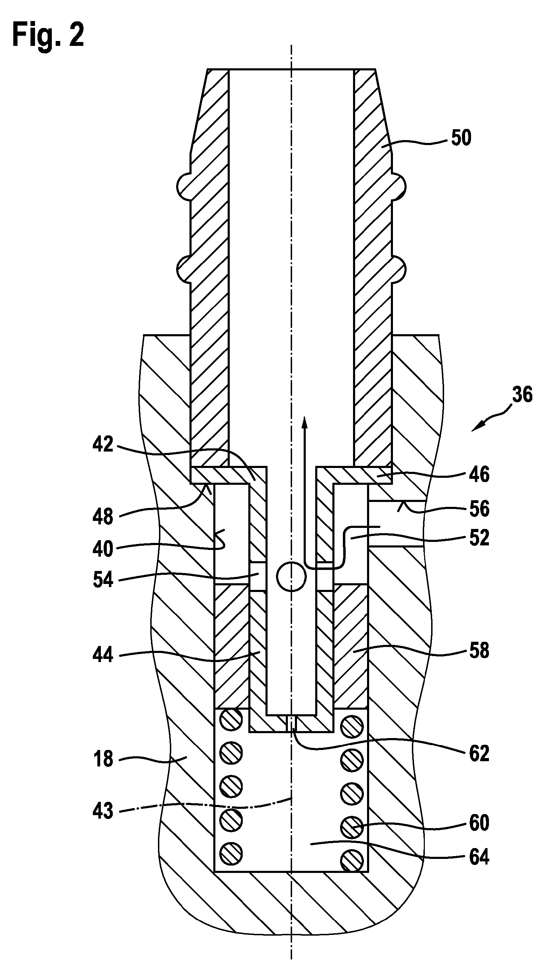

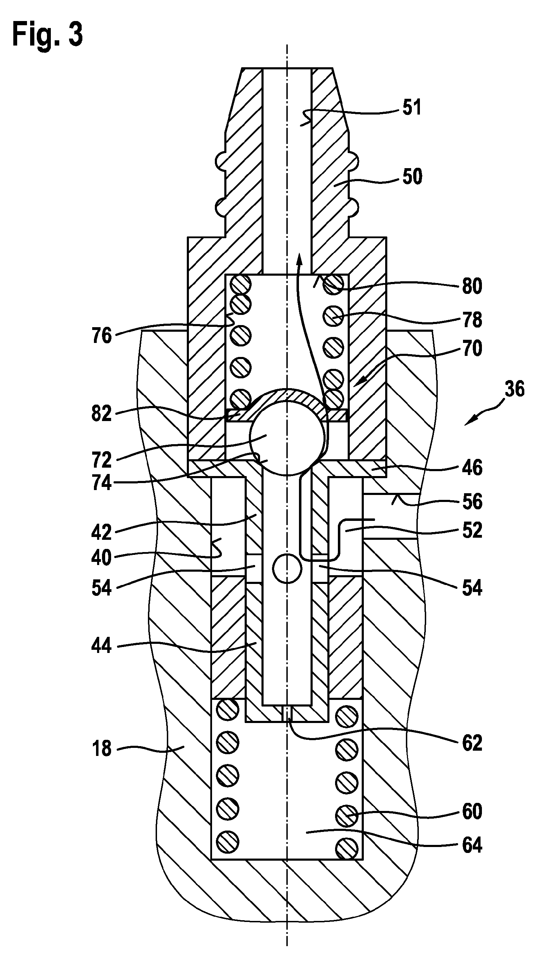

Es kann vorgesehen sein, dass der gesamte von der Förderpumpe 10 geförderte Kraftstoff zunächst durch den Innenraum 19 des Gehäuses 18 und damit den Antriebsbereich der Hochdruckpumpe 14 geleitet wird und erst stromabwärts des Innenraums 19 die Kraftstoffzumesseinrichtung 16 angeordnet ist, durch die die der Saugseite der Hochdruckpumpe 14 zugeführte Kraftstoffmenge bestimmt wird. Der Bereich zwischen der Förderpumpe 10 und der Kraftstoffzumesseinrichtung 16 bildet dabei einen Niederdruckbereich, in dem der von der Förderpumpe 10 erzeugte Druck herrscht. Durch die Förderpumpe 10 wird dabei unter Umständen eine größere Kraftstoffmenge gefördert als die der Hochdruckpumpe 14 abhängig von der Einstellung der Kraftstoffzumesseinrichtung 16 zugeführte variable Kraftstoffmenge. Aus diesem Grund ist ein Kraftstoffüberströmventil 36 vorgesehen, durch das der Druck im Niederdruckbereich begrenzt wird. Das Kraftstoffüberströmventil 36 öffnet, wenn der Druck im Niederdruckbereich dessen Öffnungsdruck überschreitet und über das geöffnete Kraftstoffüberströmventil 36 wird die von der Förderpumpe 10 geförderte, jedoch von der Hochdruckpumpe 14 nicht angesaugte Kraftstoffmenge in einen Entlastungsbereich abgesteuert, der beispielsweise ein Rücklauf 38 zum Kraftstoffvorratsbehälter 12 ist. Das Kraftstoffüberströmventil 36 wird anhand der Figuren 2 und 3 nachfolgend näher erläutert.

In Figur 2 ist das Überströmventil 36 gemäß einem ersten Ausführungsbeispiel dargestellt. Das Überströmventil 36 weist einen in einer Aufnahme 40 feststehend angeordneten Ventilträger 42 auf, der einen hülsenförmigen Abschnitt 44 und einen an diesen anschließenden Ringbund 46 aufweist. Die Aufnahme 40 kann beispielsweise im Gehäuse 18 der Hochdruckpumpe 14 in Form einer Bohrung ausgebildet sein. Die Aufnahme 40 ist im Durchmesser gestuft ausgebildet und weist einen an der Außenseite des Gehäuses 18 mündenden Abschnitt mit großem Durchmesser und einen im Gehäuse 18 angeordneten Bereich mit kleinerem Durchmesser auf. Am Übergang des Abschnitts mit großem Durchmesser zum Abschnitt mit dem kleineren Durchmesser ist in der Aufnahme 40 eine Ringschulter 48 gebildet. In den im Durchmesser großen Abschnitt der Aufnahme 40 ist ein Anschlußstutzen 50 eingefügt, beispielsweise eingepresst oder eingeschraubt. An den Anschlußstutzen 50 kann eine Leitung angeschlossen werden, die den Rücklauf 38 bildet. Der Ringbund 46 des Ventilträgers 42 liegt an der Ringschulter 48 der Aufnahme 40 an und wird durch den Anschlußstutzen 50 in Anlage an der Ringschulter 48 gehalten. Der Ventilträger 42 kann beispielsweise aus Blech als Tiefziehteil hergestellt sein.

Der hülsenförmige Abschnitt 44 des Ventilträgers 42 ist vorzugsweise hohlzylinderförmig ausgebildet und weist einen kleineren Durchmesser auf als der im Durchmesser kleinere Abschnitt der Aufnahme 40. Zwischen dem hülsenförmigen Abschnitt 44 des Ventilträgers 42, dem Ringbund 46 und der Aufnahme 40 ist somit ein Ringraum 52 vorhanden. Im Umfang des hülsenförmigen Abschnitts 44 sind wenigstens eine, vorzugsweise mehrere über den Umfang des Abschnitts 44 verteilte Öffnungen 54 vorgesehen über die der Ringraum 52 mit dem Inneren des Abschnitts 44 verbindbar ist. Der hülsenförmige Abschnitt 44 ist an seiner zum Ringbund 46 weisenden Seite offen und somit mit dem Anschlußstutzen 50 und dem Rücklauf 38 verbunden. In den Ringraum 52 der Aufnahme 40 mündet eine Verbindung 56 zum Niederdruckbereich, wobei die Verbindung 56 vorzugsweise zum Innenraum 19 der Hochdruckpumpe 14 führt und durch eine Bohrung im Gehäuse 18 der Hochdruckpumpe 14 gebildet sein kann. Die Verbindung 56 mündet beispielsweise zumindest annähernd radial in die Aufnahme 40 und in Richtung der Längsachse 43 des Ventilträgers 42 betrachtet in einem Bereich zwischen dem Ringbund 46 und der wenigstens einen Öffnung 54.

Das Überströmventil 36 weist ein Ventilglied 58 auf, das ringförmig ausgebildet ist und das auf dem hülsenförmigen Abschnitt 44 des Ventilträgers 42 verschiebbar geführt ist. Das Ventilglied 58 ist auf dem Abschnitt 44 mit geringem Spiel geführt während zwischen dem Außenmantel des Ventilglieds 58 und der Aufnahme 40 ein größeres Spiel vorhanden ist. Das Ventilglied 58 begrenzt mit seiner dem Ringbund 46 zugewandten Stirnseite den Ringraum 52 und auf der dem Ringraum 52 abgewandten Seite des Ventilglieds 58 greift eine Ventilfeder 60 am Ventilglied 58 an. Die Ventilfeder 60 ist zwischen dem Boden der Aufnahme 40 und dem Ventilglied 58 angeordnet. Der hülsenförmige Abschnitt 44 des Ventilträgers 42 ist an seinem dem Ringbund 46 abgewandten Ende im wesentlichen geschlossen ausgebildet, wobei im Boden des Abschnitts 44 eine Öffnung 62 mit definiertem Querschnitt vorgesehen sein kann. Die Öffnung 62 bildet eine Drosselstelle, über die der unterhalb des Ventilglieds 58 liegende Raum 64, der durch den hülsenförmigen Abschnitt 44 des Ventilträgers 42 und das Ventilglied 58 begrenzt wird und in dem die Ventilfeder 60 angeordnet ist, mit dem Rücklauf 38 verbunden ist.

Nachfolgend wird die Funktion des Überströmventils 36 erläutert. Wenn der Druck im Niederdruckbereich und damit auch im Ringraum 52 unterhalb des Öffnungsdrucks des Überströmventils 36 liegt so wird das Ventilglied 58 durch die Ventilfeder 60 so weit in den Ringraum 52 gedrückt, dass das Ventilglied 58 die Öffnungen 54 überdeckt und somit der Ringraum 52 und der Niederdruckbereich vom Rücklauf 38 getrennt sind. Mit zunehmendem Druck im Niederdruckbereich und damit im Ringraum 52 wird das Ventilglied 58 gegen die Kraft der Ventilfeder.60 nach unten verschoben und bei Erreichen des Öffnungsdrucks werden die Öffnungen 54 durch das Ventilglied 58 freigegeben, so dass der Ringraum 52 und der Niederdruckbereich mit dem Rücklauf 38 verbunden sind.

Das Überströmventil 36 ist in Einbaulage der Hochdruckpumpe 14 in einem Kraftfahrzeug vorzugsweise in einem hochgelegenen Bereich der Hochdruckpumpe 14 angeordnet und die Verbindung 56 des Niederdruckbereichs mündet in den Ringraum 52 in einem möglichst hoch gelegenen Bereich, so dass gegebenenfalls im Niederdruckbereich vorhandene Luft oder Gas über das Überströmventil 36 in den Rücklauf 38 gelangen kann und somit eine wirkungsvolle Entlüftung des Niederdruckbereichs ermöglicht ist.

In Figur 3 ist das Überströmventil 36 gemäß einem zweiten Ausführungsbeispiel dargestellt, bei dem dieses mit einem stromabwärts nach dem Überströmventil 36 im Rücklauf 38 vorgesehenen weiteren Druckventil 70 eine Baugruppe bildet. Die grundsätzliche Ausbildung des Überströmventils 36 ist gleich wie beim ersten Ausführungsbeispiel und wird daher nicht nochmals beschrieben. Das Druckventil 70 weist ein Ventilglied 72 auf, das beispielsweise kugelförmig ausgebildet ist und das mit einem am Ventilträger 42 ausgebildeten Ventilsitz 74 zusammenwirkt. Der Ventilsitz 74 ist dabei am Ringbund 46 des Ventilträgers 42 auf dessen dem hülsenförmigen Abschnitt 44 abgewandter Seite ausgebildet und beispielsweise zumindest annähernd konisch ausgebildet. Der Anschlußstutzen 50 weist eine Ausnehmung 76 auf, in der das Ventilglied 72 angeordnet ist, wobei das Ventilglied 72 durch eine Schließfeder 78 zum Ventilsitz 74 hin beaufschlag ist. Die Ausnehmung 76 ist gegenüber dem Durchgang 51 des Anschlußstutzens 50 zum Rücklauf 38 im Querschnitt vergrößert, wobei am Übergang von der Ausnehmung 76 zum Durchgang 51 eine Ringschulter 80 gebildet ist, an der sich die Schließfeder 78 abstützt. Die Schließfeder 78 greift direkt oder indirekt über eine Stützelement 82 am Ventilglied 72 an. Durch das Druckventil 70 ist sichergestellt, dass der Niederdruckbereich, insbesondere der Innenraum 19 der Hochdruckpumpe 14 stets mit Kraftstoff gefüllt ist und nicht über den Rücklauf leerlaufen kann.

## Patentansprüche

1. Kraftstoffüberströmventil für eine Kraftstoffeinspritzeinrichtung, insbesondere zur Druckbegrenzung in einem Niederdruckbereich der Kraftstoffeinspritzeinrichtung, mit einem in einer Aufnahme (40) beweglich angeordneten Ventilglied (58), das in Schließrichtung durch eine Ventilfeder (60) und in Öffnungsrichtung durch den im Niederdruckbereich (19,52) herrschenden Druck beaufschlagt ist, wobei durch das Überströmventil (36) bei Erreichen von dessen Öffnungsdruck eine Verbindung (54) des Niederdruckbereichs (19,52) mit einem Rücklauf (38) geöffnet wird, wobei in der Aufnahme (40) ein Ventilträger (42) feststehend angeordnet ist, wobei der Ventilträger (42) einen hülsenförmigen Abschnitt (44) aufweist, auf dem das ringförmig ausgebildete Ventilglied (58) verschiebbar geführt ist, wobei durch das Ventilglied (58) eine durch den hülsenförmigen Abschnitt (44) verlaufende Verbindung (54) mit dem Rücklauf (38) gesteuert wird, wobei der Ventilträger (42) einen an den hülsenförmigen Abschnitt (44) anschließenden Ringbund (46) aufweist, über den der Ventilträger (42) in der Aufnahme (40) gehalten ist, **dadurch gekennzeichnet, dass** durch den Ringbund (44) und das Ventilglied (58) in der Aufnahme (40) ein Ringraum (52) begrenzt wird, in den eine Verbindung (56) mit dem Niederdruckbereich (19) mündet.

2. Kraftstoffüberströmventil nach Anspruch 1, **dadurch gekennzeichnet, dass** im Mantel des hülsenförmigen Abschnitts (44) des Ventilträgers (42) als Verbindung zum Rücklauf (38) wenigstens eine, vorzugsweise mehrere Öffnungen (54) vorgesehen sind, die durch das Ventilglied (58) gesteuert werden.

3. Kraftstoffüberströmventil nach Anspruch 1 oder 2, **dadurch gekennzeichnet, dass** in der Aufnahme (40) ein Anschlußstutzen (50) für eine Rücklaufleitung befestigt ist und dass der Ventilträger (42) über seinen Ringbund (46) durch den Anschlußstutzen (50) in der Aufnahme (40) gehalten ist.

4. Kraftstoffüberströmventil nach einem der Ansprüche 1 bis 4, **dadurch gekennzeichnet, dass** durch den hülsenförmigen Abschnitt (44) des Ventilträgers (42) und das Ventilglied (58) auf der dem Ringraum (52) abgewandten Seite des Ventilglieds (58) in der Aufnahme (40) ein Raum (64) begrenzt wird, in dem die Ventilfeder (60) angeordnet ist.

5. Kraftstoffüberströmventil nach Anspruch 4, **dadurch gekennzeichnet, dass** der hülsenförmige Abschnitt (44) des Ventilträgers (42) in seinem den Federraum (64) begrenzenden Bereich wenigstens eine Öffnung (62), insbesondere mit einem definierten Drosselquerschnitt, aufweist, durch die der Federraum (64) mit dem Rücklauf (38) verbunden ist.

6. Kraftstoffüberströmventil nach einem der vorstehenden Ansprüche, **dadurch gekennzeichnet, dass** dieses zusammen mit einem stromabwärts nach dem Überströmventil (36) angeordneten Druckventil (70) eine gemeinsame Baugruppe bildet.

7. Kraftstoffüberströmventil nach Anspruch 6, **dadurch gekennzeichnet, dass** das Druckventil (70) ein Ventilglied (72) aufweist, das mit einem am Ventilträger (42) ausgebildeten Ventilsitz (74) zusammenwirkt.

8. Kraftstoffüberströmventil nach einem der vorstehenden Ansprüche, **dadurch gekennzeichnet, dass** der Ventilsitz (74) auf der dem hülsenförmigen Abschnitt (44) des Ventilträgers (42) abgewandten Seite des Ringbunds (46) des Ventilträgers (42) ausgebildet ist.

9. Kraftstoffüberströmventil nach einem der Ansprüche 3 bis 8, **dadurch gekennzeichnet, dass** der Anschlußstutzen (50) auf seiner dem Ringbund (46) des Ventilträgers (42) zugewandten Seite eine Ausnehmung (76) aufweist, in der das Ventilglied (72) des Druckventils (70) angeordnet ist.

10. Kraftstoffüberströmventil nach Anspruch 9, **dadurch gekennzeichnet, dass** in der Ausnehmung (76) des Anschlußstutzens (50) eine Schließfeder (78) für das Ventilglied (72) des Druckventils (70) angeordnet ist, die sich einerseits zumindest mittelbar am Anschlußstutzen (50) und andererseits zumindest mittelbar am Ventilglied (72) des Druckventils (70) abstützt.

11. Kraftstoffeinspritzeinrichtung für eine Brennkraftmaschine mit einer Förderpumpe (10), durch die Kraftstoff zur Saugseite einer Hochdruckpumpe (14) gefördert wird, wobei zwischen der Förderpumpe (10) und der Saugseite der Hochdruckpumpe (14) ein Kraftstoffüberströmventil (36) vorgesehen ist, **dadurch gekennzeichnet, dass** das Kraftstoffüberströmventil (36) gemäß einem der vorstehenden Ansprüche ausgebildet ist.

## Claims

1. Fuel overflow valve for a fuel injection device, in particular for pressure limitation in a low-pressure region of the fuel injection device, having a valve element (58) which is arranged in movable fashion in a receptacle (40) and which is loaded in a closing direction by a valve spring (60) and in an opening direction by the pressure prevailing in the low-pressure region (19, 52), wherein, by way of the overflow valve (36), when the opening pressure thereof is reached, a connection (54) of the low-pressure region (19, 52) to a return line (38) is opened, wherein a valve carrier (42) is arranged fixedly in the receptacle (40), wherein the valve carrier (42) has a sleeve-shaped section (44) on which the valve element (58), which is of ring-shaped form, is guided in displaceable fashion, wherein, by way of the valve element (58), a connection (54) running through the sleeve-shaped section (44) to the return line (38) is controlled, wherein the valve carrier (42) has a ring-shaped collar (46) which adjoins the sleeve-shaped section (44) and by way of which the valve carrier (42) is held in the receptacle (40), **characterized in that**, in the receptacle (40), a ring-shaped chamber (52) is delimited by the ring-shaped collar (44) and by the valve element (58), into which ring-shaped chamber a connection (56) to the low-pressure region (19) issues.

2. Fuel overflow valve according to Claim 1, **characterized in that** at least one, preferably multiple openings (54) which are controlled by the valve element (58) are provided, as a connection to the return line (38), in the shell of the sleeve-shaped section (44) of the valve carrier (42).

3. Fuel overflow valve according to Claim 1 or 2, **characterized in that** an attachment connector (50) for a return line is fastened in the receptacle (40), and **in that** the valve carrier (42) is held, by way of its ring-shaped collar (46), in the receptacle (40) by the attachment connector (50).

4. Fuel overflow valve according to one of Claims 1 to 4, **characterized in that** a chamber (64) in which the valve spring (60) is arranged is delimited in the receptacle (40), on that side of the valve element (58) which is averted from the ring-shaped chamber (52), by the sleeve-shaped section (44) of the valve carrier (42) and by the valve element (58).

5. Fuel overflow valve according to Claim 4, **characterized in that** the sleeve-shaped section (44) of the valve carrier (42) has, in its region which delimits the spring chamber (64), at least one opening (62), in particular with a defined throttle cross section, by way of which the spring chamber (64) is connected to the return line (38).

6. Fuel overflow valve according to one of the preceding claims, **characterized in that** said fuel overflow valve forms a common assembly together with a pressure valve (70) arranged downstream of the overflow valve (36).

7. Fuel overflow valve according to Claim 6, **characterized in that** the pressure valve (70) has a valve element (72) which interacts with a valve seat (74) formed on the valve carrier (42).

8. Fuel overflow valve according to one of the preceding claims, **characterized in that** the valve seat (74) is formed on that side of the ring-shaped collar (46) of the valve carrier (42) which is averted from the sleeve-shaped section (44) of the valve carrier (42).

9. Fuel overflow valve according to one of Claims 3 to 8, **characterized in that** the attachment connector (50) has, on its side facing towards the ring-shaped collar (46) of the valve carrier (42), a recess (76) in which the valve element (72) of the pressure valve (70) is arranged.

10. Fuel overflow valve according to Claim 9, **characterized in that** a closing spring (78) for the valve element (72) of the pressure valve (70) is arranged in the recess (76) of the attachment connector (50), which closing spring is, at one side, supported at least indirectly on the attachment connector (50) and is, at the other side, supported at least indirectly on the valve element (72) of the pressure valve (70).

11. Fuel injection device for an internal combustion engine, having a delivery pump (10) by means of which fuel is delivered to the suction side of a high-pressure pump (14), wherein a fuel overflow valve (36) is provided between the delivery pump (10) and the suction side of the high-pressure pump (14), **characterized in that** the fuel overflow valve (36) is designed according to one of the preceding claims.

## Revendications

1. Soupape de décharge de carburant pour un dispositif d'injection de carburant, en particulier pour la limitation de pression dans une région basse pression du dispositif d'injection de carburant, comprenant un organe de soupape (58) disposé de manière mobile dans un logement (40), lequel est sollicité dans la direction de fermeture par un ressort de soupape (60) et dans la direction d'ouverture par la pression régnant dans la région basse pression (19, 52), une connexion (54) de la région basse pression (19, 52) à un retour (38) étant ouverte par la soupape de décharge (36) une fois que sa pression d'ouverture a été atteinte, un support de soupape (42) étant disposé de manière fixe dans le logement (40), le support de soupape (42) présentant une portion en forme de douille(44), sur laquelle est guidé de manière déplaçable l'organe de soupape (58) réalisé sous forme annulaire, une connexion (54) s'étendant à travers la portion en forme de douille (44) avec le retour (38) étant commandée par l'organe de soupape (58), le support de soupape (42) présentant un épaulement annulaire (46) se raccordant à la portion en forme de douille (44), par le biais duquel épaulement annulaire le support de soupape (42) est retenu dans le logement (40), **caractérisée en ce qu'**un espace annulaire (52) est délimité par l'épaulement annulaire (44) et l'organe de soupape (58) dans le logement (40), dans lequel espace annulaire débouche une connexion (56) avec la région basse pression (19).

2. Soupape de décharge de carburant selon la revendication 1, **caractérisée en ce qu'**au moins une ouverture, de préférence plusieurs ouvertures (54), sont prévues dans l'enveloppe de la portion en forme de douille (44) du support de soupape (42) en tant que connexion au retour (38), lesquelles ouvertures sont commandées par l'organe de soupape (58).

3. Soupape de décharge de carburant selon la revendication 1 ou 2, **caractérisée en ce qu'**une tubulure de raccordement (50) pour une conduite de retour est fixée dans le logement (40) et **en ce que** le support de soupape (42) est retenu dans le logement (40) par le biais de son épaulement annulaire (46) par la tubulure de raccordement (50).

4. Soupape de décharge de carburant selon l'une quelconque des revendications 1 à 4, **caractérisée en ce qu'**un espace (64) dans lequel est disposé le ressort de soupape (60) est délimité par la portion en forme de douille (44) du support de soupape (42) et par l'organe de soupape (58) du côté de l'organe de soupape (58) opposé à l'espace annulaire (52) dans le logement (40).

5. Soupape de décharge de carburant selon la revendication 4, **caractérisée en ce que** la portion en forme de douille (44) du support de soupape (42) présente, dans sa région délimitant l'espace de ressort (64), au moins une ouverture (62), en particulier avec une section transversale d'étranglement définie, à travers laquelle l'espace de ressort (64) est connecté au retour (38).

6. Soupape de décharge de carburant selon l'une quelconque des revendications précédentes, **caractérisée en ce que** celle-ci forme un module commun conjointement avec une soupape de pression (70) disposée en aval après la soupape de décharge (36).

7. Soupape de décharge de carburant selon la revendication 6, **caractérisée en ce que** la soupape de pression (70) présente un organe de soupape (72) qui coopère avec un siège de soupape (74) réalisé sur le support de soupape (42).

8. Soupape de décharge de carburant selon l'une quelconque des revendications précédentes, **caractérisée en ce que** le siège de soupape (74) est réalisé sur le côté de l'épaulement annulaire (46) du support de soupape (42) opposé à la portion en forme de douille (44) du support de soupape (42).

9. Soupape de décharge de carburant selon l'une quelconque des revendications 3 à 8, **caractérisée en ce que** la tubulure de raccordement (50) présente sur son côté tourné vers l'épaulement annulaire (46) du support de soupape (42) un évidement (76) dans lequel est disposé l'organe de soupape (72) de la soupape de pression (70).

10. Soupape de décharge de carburant selon la revendication 9, **caractérisée en ce qu'**un ressort de fermeture (78) pour l'organe de soupape (72) de la soupape de pression (70) est disposé dans l'évidement (76) de la tubulure de raccordement (50), lequel ressort de fermeture s'appuie d'une part au moins indirectement sur la tubulure de raccordement (50) et d'autre part au moins indirectement sur l'organe de soupape (72) de la soupape de pression (70).

11. Dispositif d'injection de carburant pour un moteur à combustion interne comprenant une pompe de refoulement (10) par le biais de laquelle du carburant est refoulé vers le côté d'aspiration d'une pompe haute pression (14), une soupape de décharge de carburant (36) étant prévue entre la pompe de refoulement (10) et le côté d'aspiration de la pompe haute pression (14), **caractérisé en ce que** la soupape de décharge de carburant (36) est réalisée selon l'une quelconque des revendications précédentes.
